# EUROPEAN PATENT SPECIFICATION

(11) **EP 4 136 316 B1**
(45) Date of publication and mention of the grant of the patent: **27.08.2025**
(21) Application number: 21717106.5
(22) Date of filing: 13.04.2021
(51) Int. Cl.: E21B 33/035, F16K 37/00

(54) **AUTOMATIZATION OF DRAINAGE AND DEAERATORS**
AUTOMATISIERUNG VON ENTWÄSSERUNG UND ENTLÜFTERN
AUTOMATISATION DE DRAINAGE ET DE DÉSAÉRATEURS

(30) Priority: 16.04.2020 EP 20169892
(43) Date of publication of application: 22.02.2023
(73) Proprietor: E.ON Sverige AB, 205 09 Malmö (SE)
(72) Inventor: ROSÉN, Per, 227 33 Lund (SE); CARLSTRÖM, Helen, 237 36 Bjärred (SE); SKOGSTRÖM, Jacob, 234 42 Lomma (SE); ROSENQVIST, Fredrik, 254 51 Helsingborg (SE); LINDOFF, Bengt, 237 35 Bjärred (SE)
(74) Representative: AWA Sweden AB
(86) International application number: PCT/EP2021/059547
(87) International publication number: WO 2021/209443

(56) References cited:
- CN-A- 109 505 653
- KR-B1- 101 465 775
- US-A1- 2017 138 151
- US-A1- 2017 173 243

## Description

### Field of the invention

The invention relates to automatization of drainage or deaeration of a hydraulic system.

### Background of the invention

Hydraulic systems, e.g. district heating or district cooling systems and other closed loop liquid based energy distributed grids in need of drainage or deaeration, are equipped with low points and high points, wherein the low points are located in the lowest parts of the system and the high points are located in the highest parts of the system. In the low points, fluid may accumulate, and in the high points, air may accumulate. Therefore, in the low points, the fluid may be diverted. i.e. drainage may be performed, and in the high points, the air may be diverted, i.e. deaeration may be performed.

Today, drainage and deaeration of a hydraulic system is typically performed manually by operators. A drawback with this solution is that the operators need to travel from one point to another in order to drainage or deaeration of the hydraulic system. The hydraulic systems can be large in size and the drainage or deaeration points can be located at a distance from each other, both in an area perspective but also in a height perspective. Further, drainage or deaeration usually needs to be repeated several times before it is completed. Moreover, poorly completed drainage can provide for scalding for people working with the system and poorly completed deaeration can provide for that air will circulate within the system which can lead to damages and bad function of e.g. pumps in the hydraulic system.

Even if it is known how to drainage or deaeration of the hydraulic system, these solutions can be further improved.

CN109505653 discloses a switchable drainage and plugging integrated supporting structure of water-rich tunnel. The switchable drainage and plugging integrated supporting structure comprise a tunnel supporting structure, a water plugging system and a water drainage system combined together. An original tunnel supporting measure is reinforced, the system consisting of the water drainage system, the water plugging system and a central control system is utilized to achieve turning on and off of a remote slotted hole water drainage valve according to an external water pressure monitoring result, accordingly tunnel water drainage and plugging work conditions are switched or water discharging amount is controlled. Accordingly, damage of a ground surface water system due to tunnel water drainage is decreased, and meanwhile the safety of a tunnel structure is ensured.

US2017173243 discloses a deaeration device including a vent structure with a porous material capable of swelling when moistened such that the vent structure can inhibit liquid from escaping while allowing for the removal of gases from liquids. The deaeration device is integrated into a blood chamber of an extracorporeal circuit. The blood chamber may further include sensor components for actively performing measurements on the blood while the deaeration device passively removes air from the blood. In an embodiment, the blood chamber may be an optical blood chamber including an optical measurement sensor that performs measurements used in a determination of a hematocrit level in the blood.

### Summary of the invention

It is an object of the present invention to solve at least some of the problems mentioned above.

According to a first aspect, a valve assembly for drainage or deaeration of a hydraulic system is provided. The valve assembly comprising a valve, a valve assembly controller and a sensor. The valve comprising a first side and a second side. The first side is configured to be connected to the hydraulic system. The second side is connected to a mouth piece. The valve is configured to be set in an open state or in a closed state. Upon the valve is set in the open state, fluid in the hydraulic system is free to pass the valve from the first side to the second side. The valve assembly controller comprising a transceiver and a valve assembly control circuit. The transceiver is configured to receive a control signal indicating a start of drainage or deaeration of the hydraulic system. The valve assembly control circuit is configured to execute a valve control function and a drainage or deaeration function. The valve control function is configured to set the valve in the open state or in the closed state. The drainage or deaeration function is configured to, based on the control signal, instruct the valve control function to set the valve in the open state. The sensor is configured to monitor the mouth piece to obtain sensor data pertaining to a type of fluid leaving the mouth piece upon the valve is set in the open state, wherein the type of fluid is heat transfer fluid of the hydraulic system or air.

By the present valve assembly, the drainage or deaeration in the hydraulic system may be remotely controlled. Hence, an operator does not need to travel between the different drainage or deaeration points within the hydraulic system, instead, the drainage or deaeration can be done in a remote way by using the valve assembly controller and the sensor in combination. The sensor may be configured to work as the operator's senses, e.g. eyes and/or ears, in order to monitor the drainage or deaeration.

By the present valve assembly, a more accurate and efficient solution for drainage or deaeration of the hydraulic system may be achieved. Thus, by the present valve assembly, it may not be the operator's experience that will determine whether the drainage or deaeration is completed or not, but analysis of sensor data from the sensor that monitors the mouth piece. Further, the present valve assembly may not only be used when the system needs to be drainage or deaeration, but also when the valves need to be exercised. Thus, the valves need to be exercised every now and then in order to be in good condition. In addition, the valves constitute weak points within the hydraulic system and by the present valve assembly, these can be controlled in a better and more efficient way.

Further, by using the present valve assembly, the drainage or deaeration of the hydraulic system may be performed during a shorter period of time compared to if manually drainage or deaeration the hydraulic system. Thus, by spending less time on drainage or deaeration of the hydraulic system, the hydraulic system may be operational for longer time periods.

The sensor may comprise a camera configured to capture images of the mouth piece.

The sensor may further comprise an illuminator configured to illuminate the mouth piece.

The sensor may comprise a microphone.

The sensor may comprise a tactile sensor. The tactile sensor may be configured to detect whether fluid is present in the mouth piece.

The sensor may comprise an electric sensor. The sensor may comprise a magnetic sensor.

The sensor may comprise a detection means. The detection means may be configured to detect a trace element. The trace element may be blended in the fluid. The trace element may be added in the hydraulic system.

The sensor may be configured to be set in a sleeping mode or in a monitoring mode.

The valve assembly control circuit may further be configured to execute a sensor control function configured to set the sensor in the sleeping mode or the monitoring mode. The drainage or deaeration function may further be configured to, based on the control signal, instruct the sensor control function to set the sensor in the monitoring mode.

The transceiver may be configured to transmit the sensor data.

The valve assembly control circuit may further be configured to execute an analyze function configured to analyze the sensor data in order to determine whether the drainage or deaeration of the hydraulic system may be completed. The analysis may be performed by running the sensor data through a neural network that may be trained to determine whether the drainage or deaeration is completed.

The analyze function may further be configured to, upon the analyze function has concluded that the drainage or deaeration of the hydraulic system is completed, generate a completion signal. The valve control function may be configured to set the valve in the closed state based on the completion signal, wherein the transceiver may be configured to transmit the completion signal.

According to a second aspect, a drainage or deaeration system for drainage or deaeration of a hydraulic system is provided. The drainage or deaeration system comprising a server and a valve assembly. The server is configured to transmit a control signal indicating a start of drainage or deaeration of the hydraulic system. The valve assembly comprising a valve, a valve assembly controller and a sensor. The valve comprising a first side and a second side. The first side is connected to the hydraulic system. The second side is connected to a mouth piece. The valve is configured to be set in an open state or in a closed state. Upon the valve is set in the open state fluid in the hydraulic system is free to pass the valve from the first side to the second side. The valve assembly controller comprising a transceiver and a valve control function. The transceiver is configured to receive the control signal. The valve assembly control circuit is configured to execute a valve control function and a drainage or deaeration function. The valve control function is configured to set the valve in the open state or closed state. The drainage or deaeration function is configured to, based on the control signal, instruct the valve control function to set the valve in the open state. The sensor is configured to monitor the mouth piece to obtain sensor data pertaining to a type of fluid leaving the mouth piece upon the valve is set in the open state, wherein the type of fluid is heat transfer fluid of the hydraulic system or air. The valve assembly controller may further be configured to transmit the sensor data to the server, and wherein the server comprises a server control circuit. The server control circuit may be configured to execute an analyze function. The analyze function may be configured to analyze the sensor data in order to determine whether a drainage or deaeration of the hydraulic system is complete. The analysis may be performed by running the sensor data through a neural network trained to determine whether the drainage or deaeration is completed.

The analyze function may further be configured to, upon the analyze function have concluded that the drainage or deaeration of the hydraulic system is completed, generate a completion signal. The server may be configured to transmit the completion signal to the valve assembly controller. The valve assembly controller may be configured to receive the completion signal. The valve control function may be configured to set the valve in the closed state based on the completion signal.

The valve assembly control circuit may further be configured to execute a sensor control function configured to set the sensor in a sleeping mode or a monitoring mode. The drainage or deaeration function may further be configured to, based on the control signal, instruct the sensor control function to set the sensor in the monitoring mode. The sensor control function may be configured to set the sensor in the sleeping mode based on the completion signal.

The above-mentioned features of the valve assembly according to the first aspect, when applicable, apply to the drainage or deaeration system of the second aspect as well. In order to avoid undue repetition, reference is made to the above.

According to a third aspect, a method for drainage or deaeration of a hydraulic system is provided. The method comprising setting a valve in an open state. The valve may be set in the open state based on a control signal indicating a start of drainage or deaeration of the hydraulic system. Upon the valve is set in the open state, fluid in the hydraulic system is free to pass the valve from a first side of the valve to a second side of the valve. The first side is connected to the hydraulic system and the second side is connected to a mouth piece. The method further comprising monitoring the mouth piece. The mouth piece is monitored by means of a sensor in order to obtain sensor data pertaining to a type of fluid leaving the mouth piece upon the valve is set in the open state, wherein the type of fluid is heat transfer fluid of the hydraulic system or air.

The method may further comprise determining, by analyzing the sensor data, whether the drainage or deaeration of the hydraulic system may be completed. Upon drainage or deaeration may be determined to be completed, the valve may be set in a closed state and a completion signal may be transmitted.

The above-mentioned features of the valve assembly according to the first aspect and/or the above-mentioned features of the drainage or deaeration system of the second aspect, when applicable, apply to the method of the third aspect as well. In order to avoid undue repetition, reference is made to the above.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or acts of the methods described as such device and method may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

These and other aspects of the present invention will now be described in more detail, with reference to the appended drawings showing embodiments of the invention. The figures are provided to illustrate the general structures of embodiments of the present invention. Like reference numerals refer to like elements throughout.
Fig. 1 is a schematic diagram of a valve assembly for drainage or deaeration of a hydraulic system.
Fig. 2 is a schematic diagram of a valve assembly controller.
Fig. 3 is a schematic diagram of a drainage or deaeration system for drainage or deaeration of a hydraulic system.
Fig. 4 is a schematic diagram of a server.
Fig. 5 is a flow chart illustrating a method for drainage or deaeration of a hydraulic system.

### Detailed description

The present invention will now be described more fully hereinafter with reference to the accompanying drawings, in which currently preferred embodiments of the invention is shown. This invention may, however, be embodied in many different forms and should not be construed as limited to the embodiments set forth herein; rather, these embodiments are provided for thoroughness and completeness, and to fully convey the scope of the invention to the skilled person.

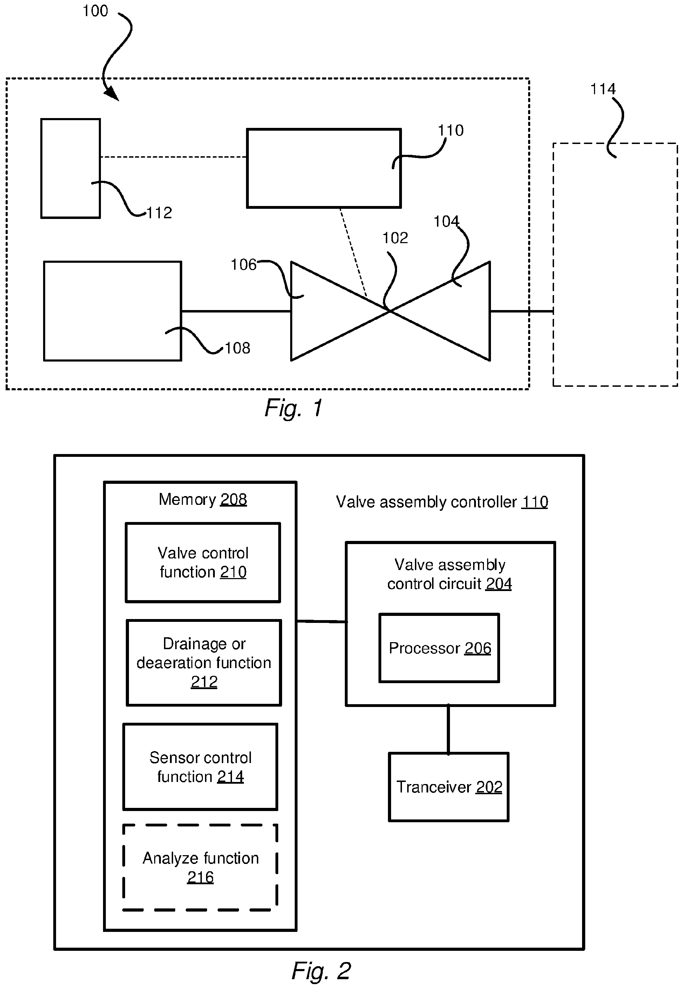

In connection with Fig. 1 a valve assembly 100 will be discussed. The valve assembly 100 is configured to drainage or deaeration of a hydraulic system 114. The valve assembly 100 is configured to be connected to the hydraulic system 114. The hydraulic system 114 may be any hydraulic system known in the art. As non-limiting examples, the hydraulic system 114 may be a radiator circuit, a district heating system, a district cooling system or a combined district heating and cooling system. The hydraulic system 114 may be arranged to transfer energy from one part of the hydraulic system 114 to another by transporting heat transfer fluid within the hydraulic system 114. The heat transfer fluid may be pressurized. Preferably, the heat transfer fluid is a heat transfer liquid. The hydraulic system 114 may be equipped with a plurality of low points and high points. A low point may be located in the lowest portions of the hydraulic system 114. A low point may be arranged in such way that heat transfer fluid in the hydraulic system 114 may be accumulated in the low point. A valve assembly 100 may be configured to drainage at a low point. A high point may be located in the highest portions of the hydraulic system 114. A high point may be arranged in such way that air may be accumulated in the high point. A valve assembly 100 may be configured to deaeration at a high point. The drainage or deaeration of the hydraulic system 114 will be discussed in more detail further below.

The valve assembly 100 comprises a valve 102 and a mouth piece 108. The valve 102 comprises a first side 104. The first side 104 is configured to be connected to the hydraulic system 114. Thus, the valve assembly 100 and the hydraulic system 114 may be connected by the first side 104 of the valve 102. The valve 102 further comprise a second side 106. The second side 106 is configured to be connected to the mouth piece 108. Thus, the valve 102 may be arranged between the hydraulic system 114 and the mouth piece 108. The valve 102 may be set to be in an open state. Upon the valve 102 may be in the open state, the valve 102 may be configured to allow fluid flowing from the hydraulic system 114 to the mouth piece 108, via the valve 102. Thus, upon the valve 102 is in the open state, the valve 102 may allow fluid to leave the hydraulic system 114 through the mouth piece 108. The valve 102 may be in the open state during drainage or deaeration of the hydraulic system 114. The valve 102 may be set to be in a closed state. Upon the valve 102 is in the closed state, fluid flowing from the hydraulic system 114 is hindered to pass the valve 102. Thus, upon the valve 102 may be in the closed state, the valve 102 may hinder the fluid to leave the hydraulic system 114. Thus, the valve 102 may be configured to control fluid that may be leaving the hydraulic system 114 through the mouth piece 108 via the valve 102. The valve 102 may not be able to be in the open state and the closed state at the same time. Alternatively, or in combination, the valve 102 may be configured to be set in any other state than the open state or the closed state, for example in a partly open state. However, the valve 102 may only be configured to be set in one state at the time. Hence, the valve 102 may be set in different degrees of openness. The more open the valve 102 is set to be the more fluid may flow via the valve 102. The open state may have different open modes.

The valve assembly 100 comprises a sensor 112. The sensor 112 may be configured to communicate with a valve assembly controller 110 of the valve assembly 100. The sensor 112 may be configured to monitor the mouth piece 108. The sensor 112 may be configured to obtain sensor data, wherein the sensor data may be pertaining to a type of fluid that is leaving the mouth piece 108. The type of fluid may be heat transfer fluid of the hydraulic system. The type of fluid may be air. The sensor data may comprise data relating to the fluid that is leaving the mouth piece 108. According to one non-limiting example, the data may be related to what type of fluid that is leaving the mouth piece 108 and if the type of fluid that is leaving the mouth piece 108 may change during the drainage or deaeration. According to yet one non-limiting example, the data may be related to similar data that an operator's senses may be able to obtain. The sensor 112 may be configured to monitor the type of fluid such that the sensor 112 may obtain data when the fluid transit from one phase to another, e.g. when the fluid transit from the heat transfer fluid of the hydraulic system to air or vice versa. The sensor 112 may be configured to be in a monitoring mode or in a sleeping mode. Upon the sensor 112 is in the monitoring mode, the sensor 112 monitors the mouth piece 108 and thus, obtain sensor data. Upon the sensor 112 is in the sleeping mode, the sensor 112 is not able to obtain the sensor data. The sensor 112 may not be able to be in the monitoring mode and the sleeping mode at the same time. As a non-limiting example, the sensor 112 may be in the monitoring mode when the valve 102 is in the open state. As yet non-limiting example, the sensor 112 may be in the sleeping mode when the valve 102 is in the closed state. Upon the valve 102 is in the closed state, the fluid is hindered from leaving the mouth piece 108 and thus, there is no sensor data pertaining to the fluid leaving the mouth piece 108 to obtain. The sensor 112 may comprise a camera. The camera may be configured to capture images of the mouth piece 108. The images may be in the form of a video stream. The camera may be an IR-camera, a camera configured to capture visible light, or a camera configured to capture both visible light and IR. The sensor 112 may further comprise an illuminator, wherein the illuminator is configured to illuminate the mouth piece 108. The illuminator may be an IR-illuminator, an illuminator emitting visible light, or an illuminator configured to emit both visible light and IR. Alternatively, or in combination, the sensor 112 may comprise a microphone. Alternatively, or in combination, the sensor 112 may comprise a tactile sensor. The tactile sensor may be configured to detect whether the fluid is present in the mouth piece 108. If the fluid is present in the mouth piece 108, it should be understood that the fluid is leaving the mouth piece 108. Alternatively, or in combination, the sensor 112 may comprise an electric sensor. Alternatively, or in combination, the sensor 112 may comprise a magnetic sensor. The electric sensor may be configured to detect whether it is fluid or air that is leaving the mouth piece 108. The magnetic sensor may be configured to detect whether it is fluid or air that is leaving the mouth piece 108. Alternatively, or in combination, the sensor 112 may comprise a detection means. The detection means may be configured to detect a trace element. As a non-limiting example, the trace element may be Pyranine. The trace element may be blended in the fluid. The trace element may be added in the hydraulic system 114. If the detection means detect the trace element, it should be understood that the fluid is leaving the mouth piece 108 and hence, the detection means may obtain sensor data. The trace element may be any trace element that may be added to the hydraulic system 114. Alternatively, or in combination, the trace element may be any trace element that may be added to the fluid. Thus, the detection means may be configured to detect any trace element present in the hydraulic system 114. Alternatively, or in combination, the detection means may be configured to detect any trace element present in the fluid.

Although discussed separately, any combination of the sensors and/or detection means may be used to achieve the purpose of obtaining sensor data. Thus, the sensor 112 may be any sensor configured to detect and/or measure and/or determine presence of fluid and/or air in the mouth piece 108. The sensor 112 may comprise more than one sensor feature. The sensor 112 may be configured to obtain sensor data from one sensor or detection means. The sensor 112 may be configured to obtain sensor data from more than one sensor and/or detection means. Thus, there may be a combination of sensors within the valve assembly 100.

The valve assembly controller 110 is configured to control the valve assembly 100. The valve assembly controller 110 may be configured to control the valve 102 and the sensor 112. The valve assembly controller 110 will be discussed in more detail in connection with Fig. 2.

One or more valve assemblies 100 may be connected to a specific hydraulic system 114. According to one example, the hydraulic system 114 may be connected to as many valve assemblies 100 as there is low points and/or high points in the hydraulic system 114. Thus, the number of valve assemblies 100 may depend on the number of low points and/or high points. By this arrangement, there may be one valve assembly controller 110 configured to control one valve assembly 100. Thus, by this arrangement, there might be the same numbers of valves 102, mouth pieces 108, valve assembly controllers 110 and sensors 112 as the number of low points and/or high points. Alternatively, or in combination, there might be one valve assembly controller 110 configured to control more than one valve assembly 100.

Thus, the present disclosure is not limited to the illustration in Fig. 1, but there can be any number of valve assemblies 100 connected to the hydraulic system 114 in order to provide for an efficient and flexible drainage or deaeration of the hydraulic system 114.

In connection with Fig. 2 the valve assembly controller 110 configured to control the valve assembly 100 will be discussed in more detail. The valve assembly controller 110 comprises a transceiver 202, a valve assembly control circuit 204 and a memory 208.

The transceiver 202 is configured to communicate with the valve 102. The transceiver 202 is configured to communicate with the sensor 118. The transceiver 202 is configured to communicate with any device suitable to receive or transmit a signal from/to the transceiver 202. The communication path over which the communication is made may be wired or wireless. The communication may include data transfers, and the like. Data transfers may include, but are not limited to, downloading and/or uploading data and receiving or sending messages. The data may be processed by the valve assembly controller 110. The processing may include storing the data in a memory, e.g. the memory 208 of the valve assembly controller 110, executing operations or functions, and so forth. The transceiver 202 may be configured to receive a control signal. The control signal may indicate a start of the drainage or deaeration of the hydraulic system 114. The control signal may be transmitted from a drainage or deaeration operating server.

The valve assembly control circuit 204 is configured to carry out overall control of functions and operations of the valve assembly controller 110. The valve assembly control circuit 204 may include a processor 206, such as a central processing unit (CPU), microcontroller, or microprocessor. The processor 206 is configured to execute program code stored in the memory 208, in order to carry out functions and operations of the valve assembly controller 110.

The memory may be one or more of a buffer, a flash memory, a hard drive, a removable media, a volatile memory, a non-volatile memory, a random access memory (RAM), or other suitable devices. In a typical arrangement, the memory 208 may include a non-volatile memory for long term data storage and a volatile memory that functions as system memory for the valve assembly control circuit 204. The memory 208 may exchange data with the valve assembly control circuit 204 over a data bus. Accompanying control lines and an address bus between the memory 208 and the valve assembly control circuit 204 also may be present.

Functions and operations of the valve assembly controller 110 may be embodied in the form of executable logic routines (e.g. lines of code, software programs, etc.) that are stored on a non-transitory computer readable medium (e.g. the memory 208) of the valve assembly controller 110 and are executed by the valve assembly control circuit 204 (e.g. the processor 206). Furthermore, the functions and operations of the valve assembly controller 110 may be a stand-alone software application of form a part of a software application that carries out additional tasks related to the valve assembly controller 110. The described functions and operations may be considering a method that the corresponding device is configured to carry out. Also, while the described functions and operations may be implemented in software, such functionality may as well be carried out via dedicated hardware or firmware, or some combination of hardware, firmware and/or software.

The valve assembly control circuit 204 may be configured to execute a valve control function 210. The valve control function 210 may be configured to set the valve 102 in the open state. The valve control function 210 may be configured to set the valve 102 in the closed state.

The valve assembly control circuit 204 may be configured to execute a drainage or deaeration function 212. The drainage or deaeration function 212 is configured to, based on the control signal, instruct the valve control function 210 to set the valve 102 in the open state. Thus, upon the valve assembly controller 110 receive the control signal, the drainage or deaeration function 212 may instruct the valve control function 210 to set the valve 102 in the open state such as the drainage or deaeration may start.

The valve assembly control circuit 204 may be configured to execute a sensor control function 214. The sensor control function 214 may be configured to set the sensor 112 in the monitoring mode. The sensor control function 214 may be configured to set the sensor 112 in the sleeping mode.

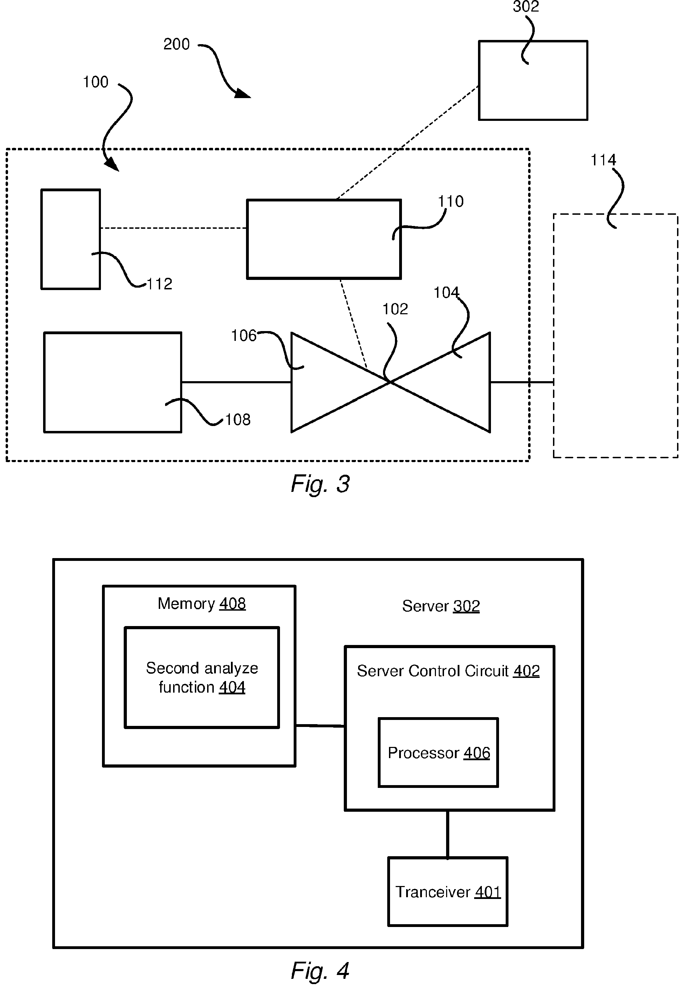

The drainage or deaeration function 212 may further be configured to, based on the control signal, instruct the sensor control function 214 to set the sensor 112 in the monitoring mode. Thus, upon the valve assembly controller 110 receive the control signal, the drainage or deaeration function 212 may instruct the sensor control function 214 to set the sensor 112 in the monitoring mode such as the sensor 112 may be able to obtain sensor data. The sensor data may be analyzed locally at the valve assembly controller 110, see the discussion on the analyze function 216 below. Alternatively, or in combination, the sensor data may be analyzed remotely at a server 302, see discussion in connection with Figs 3 and 4. Yet alternatively, or in combination, the sensor data may be analyzed by an operator controlling the drainage or deaeration of the hydraulic system 114. Upon the analyzing determine that the drainage or deaeration is completed, a completion signal may be transmitted to the valve assembly controller 110. The completion signal may comprise information indicating the completed drainage or deaeration of the hydraulic system 114. By drainage or deaeration being completed, it is meant that the drainage or deaeration has been successfully performed. Thus, the low points and/or high points in the hydraulic system 114 have been fully drainage or deaeration. That the drainage is completed may be determined by that the sensor 112 detects that air is leaving the mouth piece 108 instead of fluid. Thus, when starting the drainage, fluid is leaving the mouth piece 108. When air is leaving the mouth piece 108 instead, it may be determined that the drainage is completed. That the deaeration is completed may be determined by that the sensor 112 detects that fluid is leaving the mouth piece 108 instead of air. Thus, when starting the deaeration, air is leaving the mouth piece 108. When fluid is leaving the mouth piece 108 instead, it may be determined that the deaeration is completed.

Hence, the valve assembly control circuit 204 may be configured to execute an analyze function 216. The analyze function 216 is configured to analyze the sensor data obtained by the sensor 112. The analyze function 216 may be configured to analyze the sensor data obtained by the sensor 112 in order to determine whether the drainage or deaeration of the hydraulic system 114 is completed. The analyze function 216 may be configured to analyze the sensor data by determine what type of fluid the sensor data pertain to. The type of fluid may be the heat transfer fluid of the hydraulic system or air. Thus, the analyze function 216 may be configured to analyze whether it is the heat transfer fluid of the hydraulic system or air that is leaving the mouth piece 108. The analysis may be performed by running the sensor data through a neural network. The neural network may be trained to determine whether the drainage or deaeration is completed or not. The neural network may be trained to detect a transition between the fluid and air, or the other way around, in the mouth piece 108. Thus, the neural network may be trained to detect the transition based on the sensor data. The neural network may be trained by one or more test sequences. In the test sequences, the time period for drainage or deaeration is pre-defined and the neural network may be trained to detect the pre-defined time period. Thus, if the neural network is trained to detect the pre-defined time period, the neural network may also be trained to determine when the drainage or deaeration may be completed. Thereinafter, parameters indicating that the drainage or deaeration is completed by the neural network may be transmitted to the analyze function 216. The analyze function 216 is further configured to, upon the analyze function 216 and/or the neural network has concluded that the drainage or deaeration of the hydraulic system 114 is completed, generate the completion signal. Thus, by analyzing the sensor data, the valve assembly controller 110 may be configured to determine whether the drainage or deaeration is completed.

The valve control function 210 may further be configured to, based on the completion signal, set the valve 102 in the closed state. The sensor control function 214 may further be configured to, based on the completion signal, set the sensor 112 in the sleeping mode.

Hence, the valve assembly controller 110 may receive the control signal indicating that a drainage or deaeration is to may start. Based on the control signal, the valve control function 210 may be instructed to set the valve 102 in the open state and the sensor control function 214 may be instructed to set the sensor 112 in the monitoring mode. Upon the sensor 112 is in the monitoring mode it obtains sensor data. The sensor data pertains to fluid emitted at the mouthpiece 108. During the drainage or deaeration, the sensor 112 may transmit the obtained sensor data to the valve assembly controller 110. The sensor data may be analyzed locally at the valve assembly controller 110 by the analyze function 216. Alternatively, or in combination the sensor data may be analyzed remotely at the server 302 discussed in connection with Fig. 4. Yet alternatively, or in combination, an operator may analyze the sensor data. The sensor data may be images and/or sound depicting fluid leaving the mouth piece 108. Upon the analyzing indicates that the drainage or deaeration is complete, the operator and/or the analyze function 216, 404 may transmit a completion signal. Based on the completion signal, the valve control function 210 may be configured to set the valve 102 in the closed state and the sensor control function 214 may be configured to set the sensor 112 in the sleeping mode. Hence, the drainage or deaeration is completed and the hydraulic system 114 may be set in normal operation.

In connection with Fig. 3 a drainage or deaeration system 200 will be discussed. The drainage or deaeration system 200 is configured to drainage or deaeration of the hydraulic system 114. The drainage or deaeration system 200 comprises a valve assembly 100 as discussed in connection with Fig. 1, and a server 302. In order to avoid undue repetition, references for the valve assembly 100 and the hydraulic system 114 are made to the above. The server 302 will be discussed in more detail in connection with Fig. 4.

The server 302 comprises a transceiver 401, a server control circuit 402 and a memory 408. The transceiver 401 and the memory 408 are arranged in the same way as the transceiver 202 and memory 208 discussed in connection with the valve assembly controller 110 illustrated in Fig. 2. In order to avoid undue repetition, reference is made to the above.

The sever control circuit 402 is configured to carry out overall control of functions and operations of the server 302. The server control circuit 402 may include a processor 406, such as a central processing unit (CPU), microcontroller, or microprocessor. The processor 406 is configured to execute program code stored in the memory 408, in order to carry out functions and operations of the server 302.

Functions and operations of the server 302 may be embodied in the form of executable logic routines (e.g. lines of code, software programs, etc.) that are stored on a non-transitory computer readable medium (e.g. the memory 408) of the server and are executed by the server control circuit 402 (e.g. the processor 406). Furthermore, the functions and operations of the server 302 may be a stand-alone software application of form a part of a software application that carries out additional tasks related to the server 302. The described functions and operations may be considering a method that the corresponding device is configured to carry out. Also, while the described functions and operations may be implemented in software, such functionality may as well be carried out via dedicated hardware or firmware, or some combination of hardware, firmware and/or software.

The server 302 may be configured to transmit the control signal indicating a start of a drainage or deaeration of the hydraulic system 11.

The server 302 may be configured to receive the sensor data from the valve assembly controller 110. The server control circuit 402 may be configured to execute a second analyze function 404. The second analyze function 404 is configured to analyze the sensor data in order to determine whether the drainage or deaeration of the hydraulic system 114 is completed. The analysis may be performed by running the sensor data through the neural network. The neural network may be trained to determine whether the drainage or deaeration is completed. The second analyze function 404 is further configured to generate the completion signal. The server 302 may be configured to transmit the completion signal to the valve assembly controller 110. Thus, the second analyze function 404 is performed in a similar way as the analyze function 216. Upon the valve assembly 100 may be connected to the server 302, the analysis of the sensor data may be performed in the server 302 instead of in the valve assembly controller 110. Alternatively, or in combination, the analyzing may be performed in both the server 302 and in the valve assembly controller 110.

In addition to the above, the server 302 and the valve assembly controller 110 may communicate and thus, together perform the same functions as discussed in connection with Fig. 2. The server 302 may be configured to communicate with one valve assembly 100. The server 302 may be configured to communicate with more than one valve assembly 110.

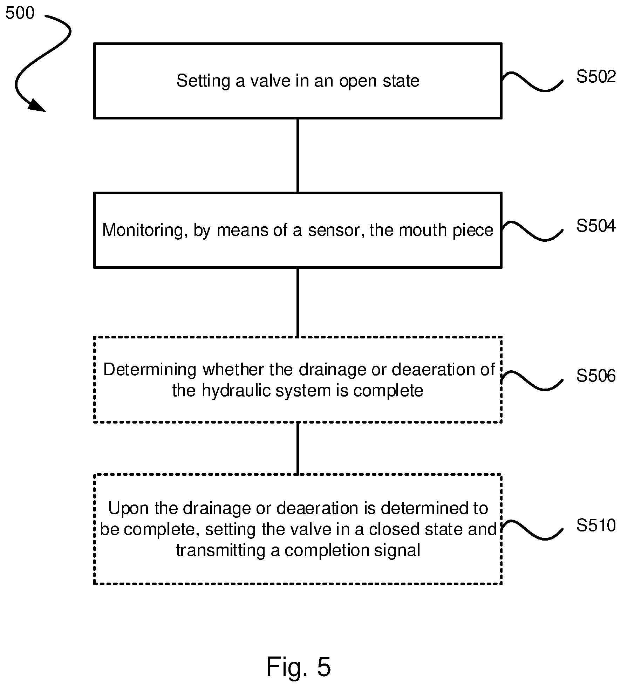

In connection with Fig. 5 a flow chart illustrating a method for drainage or deaeration of the hydraulic system 114 will be discussed. The method comprises the following steps. The steps may be performed in any suitable order.

Setting S502 the valve 102 in an open state. The step is based on the control signal, wherein the control signal may be indicating a start of drainage or deaeration of the hydraulic system 114. As being discussed above, upon the valve 102 is set in the open state, fluid in the hydraulic system 114 may be free to pass the valve 102 from the first side 104 to the second side 106. The first side 104 may be configured to be connected to the hydraulic system 114. The second side 106 may be connected to the mouth piece 108.

Monitoring S504, by means of the sensor 112, the mouth piece 108. Thus, by monitoring S504 the mouth piece 108, sensor data pertaining to fluid that is leaving the mouth piece may be obtained. The sensor data may be obtained upon the valve 102 is set in the open state.

The method may further comprise one or more of the following steps. Determining S506, by analyzing the sensor data, whether the drainage or deaeration of the hydraulic system 114 is completed. Upon the drainage or deaeration of the hydraulic system 114 is completed, setting S508 the valve 102 in the closed state and transmitting the completion signal.

The person skilled in the art realizes that the present invention by no means is limited to the preferred embodiments described above. On the contrary, many modifications and variations are possible within the scope of the appended claims.

For example, the valve assembly 100 may comprise a battery powering one or more of the components of the valve assembly 100. The battery may be exchangeable. Alternatively, or in combination, the battery may be chargeable.

The sensor 112 may comprise one or more of: a temperature sensor, a pressure sensor and a humidity sensor.

The sensor may comprise a LIDAR. A LIDAR may give information about proximity alerts and measure speed of fluid ejected from the mouth piece 108.

Additionally, variations to the disclosed embodiments can be understood and effected by the skilled person in practicing the claimed invention, from a study of the drawings, the disclosure, and the appended claims.

## Claims

1. A valve assembly (100) for drainage or deaeration of a hydraulic system (114), the valve assembly (100) comprising:
a valve (102) comprising a first side (104) and a second side (106), the first side (104) is configured to be connected to the hydraulic system (114) and the second side (106) is connected to a mouth piece (108), wherein the valve (102) is configured to be set in an open state or in a closed state, wherein, upon the valve (102) is set in the open state, fluid in the hydraulic system is free to pass the valve (102) from the first side (104) to the second side (106);
a valve assembly controller (110) comprising a transceiver (202) configured to receive a control signal indicating a start of drainage or deaeration of the hydraulic system (114) and a valve assembly control circuit (204) configured to execute:
a valve control function (210) configured to set the valve (102) in the open state or closed state; and
a drainage or deaeration function (212) configured to, based on the control signal, instruct the valve control function (210) to set the valve (102) in the open state; and
a sensor (112) configured to monitor the mouth piece (108) to obtain sensor data pertaining to a type of fluid leaving the mouth piece (108) upon the valve (102) is set in the open state, wherein the type of fluid is heat transfer fluid of the hydraulic system or air.

2. The valve assembly according to claim 1, wherein the sensor (112) comprises a camera configured to capture images of the mouth piece (108).

3. The valve assembly according to claim 2, wherein the sensor (112) further comprises an illuminator configured to illuminate the mouth piece (108).

4. The valve assembly according to any one of claims 1 to 3, wherein the sensor (112) comprises a microphone.

5. The valve assembly according to any one of claims 1 to 4, wherein the sensor (112) is configured to be set in a sleeping mode or in a monitoring mode.

6. The valve assembly according to claim 5, wherein the valve assembly control circuit (204) is further configured to execute:
a sensor control function (214) configured to set the sensor (112) in the sleeping mode or the monitoring mode,
wherein the drainage or deaeration function (212) is further configured to, based on the control signal, instruct the sensor control function (214) to set the sensor in the monitoring mode.

7. The valve assembly according to any one of claims 1 to 6, wherein the transceiver (202) is configured to transmit the sensor data.

8. The valve assembly according to any one of claims 1 to 7, wherein the valve assembly control circuit (204) is further configured to execute:
an analyze function (216) configured to analyze the sensor data in order to determine whether the drainage or deaeration of the hydraulic system (114) is completed, wherein the analysis is performed by running the sensor data through a neural network trained to determine whether the drainage or deaeration is completed.

9. The valve assembly according to claim 8, wherein the analyze function (216) is further configured to, upon the analyze function (216) has concluded that the drainage or deaeration of the hydraulic system is completed, generate a completion signal, wherein the valve control function (210) is configured to set the valve (102) in the closed state based on the completion signal, wherein the transceiver (202) is configured to transmit the completion signal.

10. A drainage or deaeration system (200) for drainage or deaeration of a hydraulic system (114), the drainage or deaeration system (200) comprising:
a server (302) configured to transmit a control signal indicating a start of drainage or deaeration of the hydraulic system (114); and
a valve assembly (100) according to any one of claims 1-9.

11. The drainage or deaeration system (200) according to claim 11, wherein the valve assembly controller (110) is further configured to transmit the sensor data to the server (302), and wherein the server (302) comprises a server control circuit (402) configured to execute:
a second analyze function (404) configured to analyze the sensor data in order to determine whether a drainage or deaeration of the hydraulic system (114) is completed, wherein the analysis is performed by running the sensor data through a neural network trained to determine whether the drainage or deaeration is completed.

12. The drainage or deaeration system (200) according to claim 11,
wherein the second analyze function (404) is further configured to, upon the second analyze function (404) has concluded that the drainage or deaeration of the hydraulic system (114) is completed, generate a completion signal,
wherein the server (302) is configured to transmit the completion signal to the valve assembly controller (110),
wherein the valve assembly controller (110) is configured to receive the completion signal, wherein the valve control function (210) is configured to set the valve (102) in the closed state based on the completion signal.

13. The drainage or deaeration system (200) according to claim 12, wherein the valve assembly control circuit is further configured to execute:
a sensor control function (214) configured to set the sensor (112) in a sleeping mode or a monitoring mode,
wherein the drainage or deaeration function (212) is further configured to, based on the control signal, instruct the sensor control function (214) to set the sensor (112) in the monitoring mode, and
wherein the sensor control function (214) is configured to set the sensor (112) in the sleeping mode based on the completion signal.

14. A method for drainage or deaeration of a hydraulic system (114), the method comprising:
based on a control signal indicating a start of drainage or deaeration of the hydraulic system (114), setting (S502) a valve (102) in an open state, wherein, upon the valve (102) is set in the open state, fluid in the hydraulic system (114) is free to pass the valve (102) from a first side (104) of the valve (102) to a second side (106) of the valve (102), wherein the first side (104) is connected to the hydraulic system (114) and the second side (106) is connected to a mouth piece (108); and
monitoring (S504), by means of a sensor (112), the mouth piece (108) to obtain sensor data pertaining to a type of fluid leaving the mouth piece (108) upon the valve (102) is set in the open state, wherein the type of fluid is heat transfer fluid of the hydraulic system or air.

15. The method according to claim 14, further comprising:
determining (S506), by analyzing the sensor data, whether the drainage or deaeration of the hydraulic system (114) is completed; and
upon drainage or deaeration is determined to be completed setting (S508) the valve (102) in a closed state and transmitting a completion signal.

## Patentansprüche

1. Ventilanordnung (100) zur Entwässerung und Entlüftung eines Hydrauliksystems (114), wobei die Ventilanordnung (100) umfasst:
ein Ventil (102), das eine erste Seite (104) und eine zweite Seite (106) umfasst, wobei die erste Seite (104) dafür ausgelegt ist, mit dem Hydrauliksystem (114) verbunden zu werden, und die zweite Seite (106) mit einem Mundstück (108) verbunden ist, wobei das Ventil (102) dafür ausgelegt ist, in einen offenen Zustand oder in einen geschlossenen Zustand versetzt zu werden, wobei, wenn das Ventil (102) in den offenen Zustand versetzt ist, Fluid in dem Hydrauliksystem das Ventil (102) frei von der ersten Seite (104) zur zweiten Seite (106) durchströmen kann;
eine Ventilanordnungs-Steuereinheit (110), die einen Sendeempfänger (202), der dafür ausgelegt ist, ein Steuersignal zu empfangen, das einen Beginn der Entwässerung oder Entlüftung des Hydrauliksystems (114) anzeigt, und eine Ventilanordnungs-Steuerschaltung (204) umfasst, die dafür ausgelegt ist auszuführen:
eine Ventilsteuerungsfunktion (210), die dafür ausgelegt ist, das Ventil (102) in den offenen Zustand oder geschlossenen Zustand zu versetzen; und
eine Entwässerungs- oder Entlüftungsfunktion (212), die dafür ausgelegt ist, basierend auf dem Steuersignal die Ventilsteuerungsfunktion (210) anzuweisen, das Ventil (102) in den offenen Zustand zu versetzen; und
einen Sensor (112), der dafür ausgelegt ist, das Mundstück (108) zu überwachen, um Sensordaten zu gewinnen, die zu einem Typ des Fluids gehören, welches das Mundstück (108) verlässt, wenn das Ventil (102) in den offenen Zustand versetzt ist, wobei der Typ des Fluids Wärmeübertragungsfluid des Hydrauliksystems oder Luft ist.

2. Ventilanordnung nach Anspruch 1, wobei der Sensor (112) eine Kamera umfasst, die dafür ausgelegt ist, Bilder des Mundstücks (108) aufzunehmen.

3. Ventilanordnung nach Anspruch 2, wobei der Sensor (112) ferner einen Illuminator umfasst, der dafür ausgelegt ist, das Mundstück (108) zu beleuchten.

4. Ventilanordnung nach einem der Ansprüche 1 bis 3, wobei der Sensor (112) ein Mikrofon umfasst.

5. Ventilanordnung nach einem der Ansprüche 1 bis 4, wobei der Sensor (112) dafür ausgelegt ist, in einen Ruhemodus oder in einen Überwachungsmodus versetzt zu werden.

6. Ventilanordnung nach Anspruch 5, wobei die Ventilanordnungs-Steuerschaltung (204) ferner dafür ausgelegt ist auszuführen:
eine Sensorsteuerungsfunktion (214), die dafür ausgelegt ist, den Sensor (112) in den Ruhemodus oder den Überwachungsmodus zu versetzen,
wobei die Entwässerungs- oder Entlüftungsfunktion (212) ferner dafür ausgelegt ist, basierend auf dem Steuersignal die Sensorsteuerungsfunktion (214) anzuweisen, den Sensor in den Überwachungsmodus zu versetzen.

7. Ventilanordnung nach einem der Ansprüche 1 bis 6, wobei der Sendeempfänger (202) dafür ausgelegt ist, die Sensordaten zu senden.

8. Ventilanordnung nach einem der Ansprüche 1 bis 7, wobei die Ventilanordnungs-Steuerschaltung (204) ferner dafür ausgelegt ist auszuführen:
eine Analysefunktion (216), die dafür ausgelegt ist, die Sensordaten zu analysieren, um zu bestimmen, ob die Entwässerung oder Entlüftung des Hydrauliksystems (114) abgeschlossen ist, wobei die Analyse durchgeführt wird, indem die Sensordaten durch ein neuronales Netz geleitet werden, das dafür trainiert ist zu bestimmen, ob die Entwässerung oder Entlüftung abgeschlossen ist.

9. Ventilanordnung nach Anspruch 8, wobei die Analysefunktion (216) ferner dafür ausgelegt ist, wenn die Analysefunktion (216) festgestellt hat, dass die Entwässerung oder Entlüftung des Hydrauliksystems abgeschlossen ist, ein Abschlusssignal zu erzeugen, wobei die Ventilsteuerungsfunktion (210) dafür ausgelegt ist, das Ventil (102) basierend auf dem Abschlusssignal in den geschlossenen Zustand zu versetzen, wobei der Sendeempfänger (202) dafür ausgelegt ist, das Abschlusssignal zu senden.

10. Entwässerungs- oder Entlüftungssystem (200) zur Entwässerung und Entlüftung eines Hydrauliksystems (114), wobei das Entwässerungs- oder Entlüftungssystem (200) umfasst:
einen Server (302), der dafür ausgelegt ist, ein Steuersignal zu senden, das einen Beginn der Entwässerung oder Entlüftung des Hydrauliksystems (114) anzeigt; und
eine Ventilanordnung (100) nach einem der Ansprüche 1-9.

11. Entwässerungs- oder Entlüftungssystem (200) nach Anspruch 10, wobei die Ventilanordnungs-Steuereinheit (110) ferner dafür ausgelegt ist, die Sensordaten an den Server (302) zu senden, und wobei der Server (302) eine Serversteuerschaltung (402) umfasst, die dafür ausgelegt ist auszuführen:
eine zweite Analysefunktion (404), die dafür ausgelegt ist, die Sensordaten zu analysieren, um zu bestimmen, ob eine Entwässerung oder Entlüftung des Hydrauliksystems (114) abgeschlossen ist, wobei die Analyse durchgeführt wird, indem die Sensordaten durch ein neuronales Netz geleitet werden, das dafür trainiert ist zu bestimmen, ob die Entwässerung oder Entlüftung abgeschlossen ist.

12. Entwässerungs- oder Entlüftungssystem (200) nach Anspruch 11,
wobei die zweite Analysefunktion (404) ferner dafür ausgelegt ist, wenn die zweite Analysefunktion (404) festgestellt hat, dass die Entwässerung oder Entlüftung des Hydrauliksystems (114) abgeschlossen ist, ein Abschlusssignal zu erzeugen,
wobei der Server (302) dafür ausgelegt ist, das Abschlusssignal an die Ventilanordnungs-Steuereinheit (110) zu senden,
wobei die Ventilanordnungs-Steuereinheit (110) dafür ausgelegt ist, das Abschlusssignal zu empfangen, wobei die Ventilsteuerungsfunktion (210) dafür ausgelegt ist, das Ventil (102) basierend auf dem Abschlusssignal in den geschlossenen Zustand zu versetzen.

13. Entwässerungs- oder Entlüftungssystem (200) nach Anspruch 12, wobei die Ventilanordnungs-Steuerschaltung ferner dafür ausgelegt ist auszuführen:
eine Sensorsteuerungsfunktion (214), die dafür ausgelegt ist, den Sensor (112) in einen Ruhemodus oder einen Überwachungsmodus zu versetzen,
wobei die Entwässerungs- oder Entlüftungsfunktion (212) ferner dafür ausgelegt ist, basierend auf dem Steuersignal die Sensorsteuerungsfunktion (214) anzuweisen, den Sensor (112) in den Überwachungsmodus zu versetzen, und
wobei die Sensorsteuerungsfunktion (214) dafür ausgelegt ist, den Sensor (112) basierend auf dem Abschlusssignal in den Ruhemodus zu versetzen.

14. Verfahren zur Entwässerung und Entlüftung eines Hydrauliksystems (114), wobei das Verfahren umfasst:
basierend auf einem Steuersignal, das einen Beginn der Entwässerung oder Entlüftung des Hydrauliksystems (114) anzeigt, Versetzen (S502) eines Ventils (102) in einen offenen Zustand, wobei, wenn das Ventil (102) in den offenen Zustand versetzt ist, Fluid in dem Hydrauliksystem (114) das Ventil (102) frei von einer ersten Seite (104) des Ventils (102) zu einer zweiten Seite (106) des Ventils (102) durchströmen kann, wobei die erste Seite (104) mit dem Hydrauliksystem (114) verbunden ist und die zweite Seite (106) mit einem Mundstück (108) verbunden ist; und
Überwachen (S504), mittels eines Sensors (112), des Mundstücks (108), um Sensordaten zu gewinnen, die zu einem Typ des Fluids gehören, welches das Mundstück (108) verlässt, wenn das Ventil (102) in den offenen Zustand versetzt ist, wobei der Typ des Fluids Wärmeübertragungsfluid des Hydrauliksystems oder Luft ist.

15. Verfahren nach Anspruch 14, welches ferner umfasst:
Bestimmen (S506), durch Analysieren der Sensordaten, ob die Entwässerung oder Entlüftung des Hydrauliksystems (114) abgeschlossen ist; und
wenn bestimmt wird, dass die Entwässerung oder Entlüftung abgeschlossen ist, Versetzen (S508) des Ventils (102) in einen geschlossenen Zustand und Senden eines Abschlusssignals.

## Revendications

1. Ensemble de soupape (100) pour le drainage ou la désaération d'un système hydraulique (114), l'ensemble de soupape (100) comprenant :
une soupape (102) comprenant un premier côté (104) et un deuxième côté (106), le premier côté (104) étant configuré pour être relié au système hydraulique (114) et le deuxième côté (106) étant relié à un embout (108), dans lequel la soupape (102) est configurée pour être réglée dans un état ouvert ou dans un état fermé, dans lequel, lorsque la soupape (102) est réglée dans l'état ouvert, du fluide dans le système hydraulique est libre de passer par la soupape (102) depuis le premier côté (104) vers le deuxième côté (106) ;
un moyen de commande d'ensemble de soupape (110) comprenant un émetteur-récepteur (202) configuré pour recevoir un signal de commande indiquant un démarrage du drainage ou de la désaération du système hydraulique (114) et un circuit de commande d'ensemble de soupape (204) configuré pour exécuter :
une fonction de commande de soupape (210) configurée pour régler la soupape (102) dans l'état ouvert ou dans l'état fermé ; et
une fonction de drainage ou de désaération (212) configurée pour demander à la fonction de commande de soupape (210) de régler la soupape (102) dans l'état ouvert sur la base du signal de commande ; et
un capteur (112) configuré pour surveiller l'embout (108) pour obtenir des données de capteur concernant un type de fluide quittant l'embout (108) lorsque la soupape (102) est réglée dans l'état ouvert, dans lequel le type de fluide est un fluide caloporteur du système hydraulique ou de l'air.

2. Ensemble de soupape selon la revendication 1, dans lequel le capteur (112) comprend une caméra configurée pour capturer des images de l'embout (108).

3. Ensemble de soupape selon la revendication 2, dans lequel le capteur (112) comprend un moyen d'éclairage configuré pour éclairer l'embout (108).

4. Ensemble de soupape selon l'une quelconque des revendications 1 à 3, dans lequel le capteur (112) comprend un microphone.

5. Ensemble de soupape selon l'une quelconque des revendications 1 à 4, dans lequel le capteur (112) est configuré pour être réglé dans un mode veille ou dans un mode surveillance.

6. Ensemble de soupape selon la revendication 5, dans lequel le circuit de commande d'ensemble de soupape (204) est en outre configuré pour exécuter :
une fonction de commande de capteur (214) configurée pour régler le capteur (112) dans le mode veille ou le mode surveillance,
dans lequel la fonction de drainage ou de désaération (212) est en outre configurée pour demander à la fonction de commande de capteur (214) de régler le capteur dans le mode surveillance sur la base du signal de commande.

7. Ensemble de soupape selon l'une quelconque des revendications 1 à 6, dans lequel l'émetteur-récepteur (202) est configuré pour transmettre les données de capteur.

8. Ensemble de soupape selon l'une quelconque des revendications 1 à 7, dans lequel le circuit de commande d'ensemble de soupape (204) est en outre configuré pour exécuter :
une fonction d'analyse (216) configurée pour analyser les données de capteur afin de déterminer si le drainage ou la désaération du système hydraulique (114) est achevé(e), dans lequel l'analyse est effectuée en exécutant les données de capteur à travers un réseau neuronal entraîné pour déterminer si le drainage ou la désaération est achevé(e).

9. Ensemble de soupape selon la revendication 8, dans lequel la fonction d'analyse (216) est en outre configurée pour générer un signal d'achèvement lorsque la fonction d'analyse (216) a conclu que le drainage ou la désaération du système hydraulique est achevé(e), dans lequel la fonction de commande de soupape (210) est configurée pour régler la soupape (102) dans l'état fermé sur la base du signal d'achèvement, dans lequel l'émetteur-récepteur (202) est configuré pour transmettre le signal d'achèvement.

10. Système de drainage ou de désaération (200) pour le drainage ou la désaération d'un système hydraulique (114), le système de drainage ou de désaération (200) comprenant :
un serveur (302) configuré pour transmettre un signal de commande indiquant un démarrage du drainage ou de la désaération du système hydraulique (114) ; et
un ensemble de soupape (100) selon l'une quelconque des revendications 1 à 9.

11. Système de drainage ou de désaération (200) selon la revendication 10, dans lequel le moyen de commande d'ensemble de soupape (110) est en outre configuré pour transmettre les données de capteur au serveur (302), et dans lequel le serveur (302) comprend un circuit de commande de serveur (402) configuré pour exécuter :
une deuxième fonction d'analyse (404) configurée pour analyser les données de capteur afin de déterminer si un drainage ou une désaération du système hydraulique (114) est achevé(e), dans lequel l'analyse est effectuée en exécutant les données de capteur à travers un réseau neuronal entraîné pour déterminer si le drainage ou la désaération est achevé(e).

12. Système de drainage ou de désaération (200) selon la revendication 11,
dans lequel la deuxième fonction d'analyse (404) est en outre configurée pour générer un signal d'achèvement lorsque la deuxième fonction d'analyse (404) a conclu que le drainage ou la désaération du système hydraulique (114) est achevé(e),
dans lequel le serveur (302) est configuré pour transmettre le signal d'achèvement au moyen de commande d'ensemble de soupape (110),
dans lequel le moyen de commande d'ensemble de soupape (110) est configuré pour recevoir le signal d'achèvement, dans lequel la fonction de commande de soupape (210) est configurée pour régler la soupape (102) dans l'état fermé sur la base du signal d'achèvement.

13. Système de drainage ou de désaération (200) selon la revendication 12, dans lequel le circuit de commande d'ensemble de soupape est en outre configuré pour exécuter :
une fonction de commande de capteur (214) configurée pour régler le capteur (112) dans un mode veille ou dans un mode surveillance,
dans lequel la fonction de drainage ou de désaération (212) est en outre configurée pour demander à la fonction de commande de capteur (214) de régler le capteur (112) dans le mode surveillance sur la base du signal de commande, et
dans lequel la fonction de commande de capteur (214) est configurée pour régler le capteur (112) dans le mode veille sur la base du signal d'achèvement.

14. Procédé de drainage ou de désaération d'un système hydraulique (114), le procédé comprenant :
sur la base d'un signal de commande indiquant un démarrage d'un drainage ou d'une désaération du système hydraulique (114), le réglage (S502) d'une soupape (102) dans un état ouvert, dans lequel, lorsque la soupape (102) est réglée dans l'état ouvert, du fluide dans le système hydraulique (114) est libre de passer par la soupape (102) depuis un premier côté (104) de la soupape (102) vers un deuxième côté (106) de la soupape (102), dans lequel le premier côté (104) est relié au système hydraulique (114) et le deuxième côté (106) est relié à un embout (108) ; et
la surveillance (S504), à l'aide d'un capteur (112), de l'embout (108) pour obtenir des données de capteur concernant un type de fluide quittant l'embout (108) lorsque la soupape (102) est réglée dans l'état ouvert, dans lequel le type de fluide est un fluide caloporteur du système hydraulique ou de l'air.

15. Procédé selon la revendication 14, comprenant en outre :
la détermination (S506), par l'analyse des données de capteur, si le drainage ou la désaération du système hydraulique (114) est achevé(e) ; et
lorsqu'il est déterminé que le drainage ou la désaération est achevé(e), le réglage (S508) de la soupape (102) dans un état fermé et la transmission d'un signal d'achèvement.
